# EUROPEAN PATENT APPLICATION

(11) **EP 1 650 691 A2**
(43) Date of publication of application: **26.04.2006**
(21) Application number: 05256597.5
(22) Date of filing: 25.10.2005
(51) Int. Cl.: G06F 21/24

(54) **Information management system, information processor, and information management method**

(30) Priority: 25.10.2004 JP 2004309560; 29.09.2005 JP 2005284904
(71) Applicant: Ricoh Company, Ltd., Tokyo 143-8555 (JP)
(72) Inventor: Takeuchi, Sachiko, Tokyo (JP); Matsuda, Toru, Kawasaki-shi Kamagawa (JP)
(74) Representative: Mounteney, Simon James

(57) **Abstract**

An information management system 1, information processors 10, 20, and an information management method are disclosed. The information management system includes the information processors, and an information management apparatus 30 that are connected through a network 60. One of the information processors adjusts a level of encryption of information that consists of two or more items having different security levels according to predetermined credibility, when storing the information in the information management apparatus.

## Description

### BACKGROUND OF THE INVENTION

### 1. Field of the Invention

The present invention relates to an information management system, an information processor, and an information management method; and especially, relates to an information management system, an information processor, and an information management method of managing information that consists of two or more items having different security levels.

### 2. Description of the Related Art

Information processors, such as a personal computer, manage user information, such as a mail address, as address book information. Further, an image formation apparatus such as a printer, a copying machine (copier), a facsimile apparatus (FAX), and a scanner includes an information processor that manages user information as address book information for managing a destination. An example of such an image formation apparatus is disclosed by Patent Reference 1.

Recently and continuing, image formation apparatuses are often connected to a network such as a LAN (Local Area Network), and share address book information with another image formation apparatus. Further, an address book management tool serving as an address book managing apparatus is capable of intensively (centrally) managing the address book information by collecting the address book information from one or more image formation apparatuses of the network.

Here, the address book information usually contains information about a password that only an authorized user should be able to access and edit, and information that all users can access and edit. Accordingly, if the address book information is transmitted in plaintext, the information is subject to access and modification by an unauthorized party.

In order to cope with this situation, conventionally, all the address information is encrypted so that the address book information transmitted between the image formation apparatuses, and between the image formation apparatus and the address book management tool cannot not be viewed and modified by the unauthorized party. For example, Patent Reference 2 discloses contents that are to be encrypted when transmitting information between two or more apparatuses.
[Patent reference 1] JPA 2002 84383
[Patent reference 2] JPA 2000 209231

### [Problem(s) to be solved by the Invention]

Encrypting all the address book information is adequate if only a process of transmitting the address book information between the image formation apparatus and the address book management tool is taken into consideration. However, the image formation apparatus and the address book management tool have to decrypt the encrypted address book information for viewing and editing the address book information.

Especially, when information accessible by an authorized party and information accessible by any party are intermingled, decryption of all the encrypted address book information at another image formation apparatus and the address book management tool may cause a security problem.

On the other hand, if the security level of another image formation apparatus and the address book management tool are sufficiently high and reliable, it is desirable to minimize the range of encryption of the address book information from a viewpoint of process efficiency.

That is, the address book management system, serving two or more image formation apparatuses and an address book management tool that are connected through a network, has a problem in that the process efficiency of the address book information becomes low if the security level is raised, and the security level becomes low if the process efficiency of the address book information is raised.

### SUMMARY OF THE INVENTION

The present invention is made in view of the above problems, and provides an information management system, an information processor, and an information management method that substantially obviate one or more of the problems caused by the limitations and disadvantages of the related art. The present invention especially provides an information management system, an information processor, and an information management method that are capable of appropriately adjusting (balancing) information security level and process efficiency.

Features of the present invention are set forth in the description that follows, and in part will become apparent from the description and the accompanying drawings, or may be learned by practice of the invention according to the teachings provided in the description. Problem solutions provided by the present invention will be realized and attained by an information management system, an information processor, and an information management method particularly pointed out in the specification in such full, clear, concise, and exact terms as to enable a person having ordinary skill in the art to practice the invention.

To achieve these solutions and in accordance with the purpose of the invention, as embodied and broadly described herein, the invention provides as follows.

An aspect of the present invention provides an information management system that includes one or more information processors and an information management apparatus that are connected through a predetermined network, the information processors being for storing information that consists of two or more items having different security levels in the information management apparatus, wherein each of the items of the information is assigned an encryption level that is variable according to predetermined credibility.

Another aspect of the present invention provides an information processor for storing the information consisting of two or more items having different security levels in the information management apparatus connected through the predetermined network, the information processor including an encryption level adjusting unit for assigning an encryption level to each of the items of the information according to the predetermined credibility, when storing the information in the information management apparatus.

Another aspect of the present invention provides an information management method for the information management system that includes the information processor(s) and the information management apparatus that are connected through the predetermined network, the information management method including a step of the information processor assigning an encryption level to each of the items of the information according to predetermined credibility, and a step of storing the information, to which the encryption level is assigned, in the information management apparatus.

As described above, according to the present invention, different encryption levels are assigned to the information consisting of two or more items having different security levels according to the predetermined credibility. Accordingly, when the predetermined credibility is low, it is possible to set the encryption level high so that the security level is raised; and when the predetermined credibility is high, it is possible to make the encryption level low so that the process efficiency is raised.

### [Effect of the Invention]

As described above, the information management system, the information processor, and the information management method according to the present invention offer the capability of appropriately adjusting (balancing) the information security level and the process efficiency.

### BRIEF DESCRIPTION OF THE DRAWINGS

Fig. 1 is a block diagram of an embodiment of an address book management system of the present invention;
Fig. 2 is a block diagram of an image formation apparatus according the embodiment of the present invention;
Fig. 3 is a block diagram showing hardware of the image formation apparatus according to the embodiment of the present invention;
Fig. 4 is a sequence diagram showing processes of the address book management system according to Embodiment 1 of the present invention;
Fig. 5 is a flowchart of an example of a process of determining a range of encryption of the address book information, and encrypting within the range;
Fig. 6 is a sequence diagram showing a process of the address book management system according to Embodiment 2 of the present invention;
Fig. 7 is a sequence diagram of an example of a manager authentication process and a device capability acquisition process;
Fig. 8 is a sequence diagram showing a process of the address book management system according to Embodiment 3 of the present invention;
Fig. 9 is a sequence diagram showing a process of the address book management system according to Embodiment 4 of the present invention;
Fig. 10 is a sequence diagram showing a process of the address book management system according to Embodiment 5 of the present invention;
Fig. 11 is a sequence diagram showing a process of the address book management system according to Embodiment 6 of the present invention;
Fig. 12 is an example of a manager authentication screen;
Fig. 13 is an example of a device list screen when using IPv4;
Fig. 14 is an example of a device list screen when using IPv6;
Fig. 15 is an example of a device registration screen when using IPv4;
Fig. 16 is an example of a device registration screen when using IPv6;
Fig. 17 is an example of a pass phrase list screen;
Fig. 18 is a sequence diagram showing a process of the address book management system according to Embodiment 7 of the present invention;
Fig. 19 is a sequence diagram showing a process of the address book management system according to Embodiment 8 of the present invention;
Fig. 20 is an example of an address book operation screen;
Fig. 21 is a sequence diagram showing a process of the address book management system according to Embodiment 9 of the present invention;
Fig. 22 is a sequence diagram showing a process of the address book management system according to Embodiment 10 of the present invention;
Fig. 23 is a sequence diagram showing a process of the address book management system according to Embodiment 11 of the present invention;
Fig. 24 is another example of the address book operation screen;
Fig. 25 is an example of an address book edit screen;
Fig. 26 is an example of a property setting screen;
Fig. 27 is an example of a manager setting screen; and
Fig. 28 is a table showing an example of the address book information.

### DESCRIPTION OF THE PREFERRED EMBODIMENTS

In the following, embodiments of the present invention are described with reference to the accompanying drawings. The embodiments are described with examples wherein information handled is address book information that consists of two or more items having different security levels; however, the information is not limited to address book information, but may be other information. The embodiments are described with examples where an image formation apparatus serves as an information processor; however, the information processor is not limited to an image formation apparatus, but may be another information processor that handles the information that consists of two or more items having different security levels. Further, the embodiments are described with examples where an address book management tool serves as an information management apparatus; however, the information management apparatus is not limited to an address book management tool, but may be another information management apparatus that centrally manages information that consists of two or more items having different security levels.

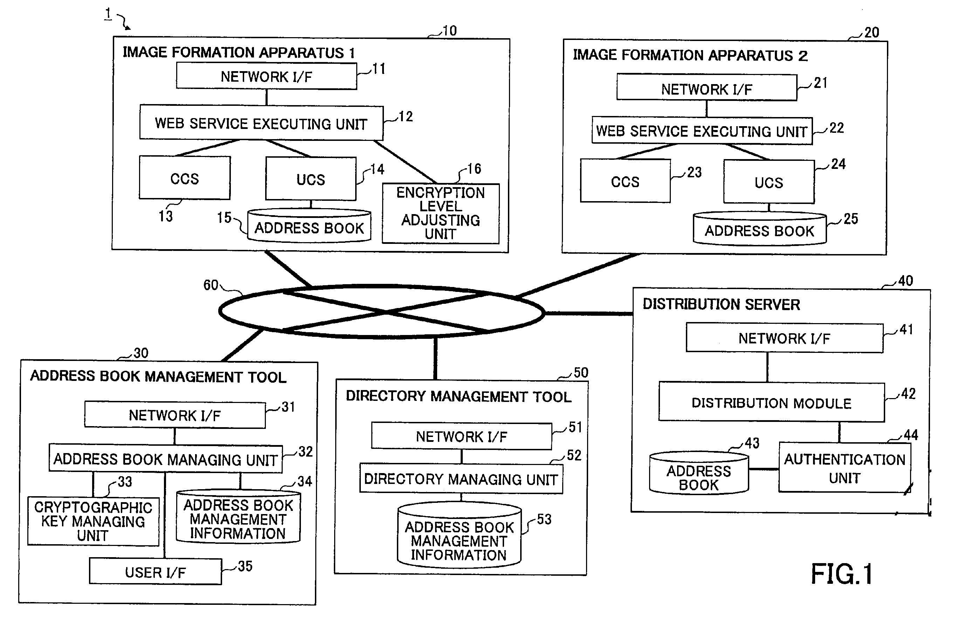

Fig. 1 is a block diagram of the address book management system 1 according to the embodiments of the present invention. The address book management system 1 includes image formation apparatuses 10 and 20, an address book management tool 30, a distribution server 40, and a directory management tool 50, which are connected through a network 60, such as LAN and the Internet. Here, the number of image formation apparatuses connected to the address book management system 1 is not limited to two.

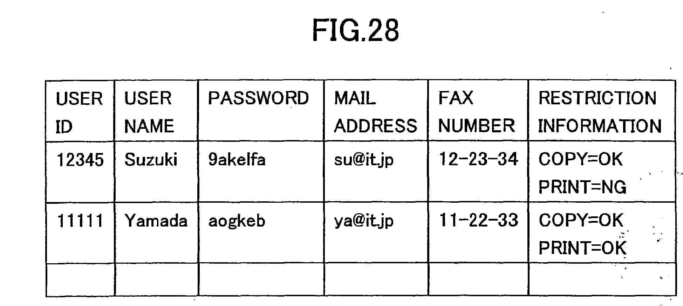

The image formation apparatus 10 includes a network I/F 11, a Web service executing unit 12, CCS 13 and UCS 14 that are described below, an address book 15 containing information about one or more users, and an encryption level adjusting unit 16. Further, the image formation apparatus 20 includes a network I/F 21, a Web service executing unit 22, CCS 23, UCS 24, and an address book 25. The image formation apparatuses 10 and 20 have address book information as shown in Fig. 28 in the respective address books 15 and 25.

Fig. 28 shows an example of the address book information. The address book information includes items such as a user ID, a user name, a password, a mail address, a FAX number, and restriction information (information about restrictions applicable to the user). The address book information shown in Fig. 28 is an example of information that consists of two or more items having different security levels.

For example, as for the address book information shown in Fig. 28, the security level of an item "Password" is the highest; the security levels of items "User ID", "User name", "Mail address", and "FAX number" are the next highest; and the security level of an item "Restriction information" is the lowest.

Since the item "Password" should not be known by any parties other than the user, its security level is made the highest. Since the items "User ID", "User name", "Mail address", "FAX number" bear a meaning even when the user leaves the image formation apparatuses 10 and 20 (i.e., the user is no longer a user), their security levels are made next highest to the item "Password". Since the item "Restriction information" does not bear a meaning when the user leaves the image formation apparatuses 10 and 20, its security level is made the lowest.

The address book management tool 30 includes a network I/F 31, an address book managing unit 32, a cryptographic key managing unit 33, address book management information 34, and a user I/F 35. The address book management tool 30 performs intensive (central) management of the address book information received from the image formation apparatuses 10 and 20.

The distribution server 40 includes a network I/F 41, a distribution module 42, an address book 43, and an authentication unit 44. The distribution server 40 holds the address book information in the address book 43. Further, the directory management tool 50 includes a network I/F 51, a directory managing unit 52, and address book management information 53.

At the address book management system 1, when, for example, user information included in the address book 15 of the image formation apparatus 10 is edited, the edited address book information is transmitted to the image formation apparatus 20 and the distribution server 40 through the address book management tool 30. When transmitting the address book information, the image formation apparatus 10 adjusts the encryption level of the address book information using the encryption level adjusting unit 16.

The image formation apparatus 10 is capable of adjusting the encryption level of the address book information by changing the range to be encrypted, and selecting an encrypting system. For example, the image formation apparatus 10 is capable of adjusting the encryption level by encrypting a part or all of the address book information as described below.

In addition, according to the address book management system 1 of the present invention, a pass phrase is transmitted to the image formation apparatus 20 and the distribution server 40, to which the address book information is transmitted such that a key (cryptographic key) is generated to decrypt the encrypted address book information as described below. In this manner, the image formation apparatus 20 and the distribution server 40 use the cryptographic key, and can decrypt the encrypted address book information.

Since disclosure of the address book information to a third party is technically possible by a manager who operates the address book management tool 30, it is desirable to enlarge the range of encryption of the address book information from the viewpoint of preventing such disclosure of the address book information by the manager. On the other hand, it is desirable to narrow the range of encryption of the address book information from a viewpoint of raising the process efficiency in using the address book information by the manager.

For example, when there is a difference between the numbers of addresses that can be stored to the corresponding address books of the image formation apparatuses 10 and 20, the address book management tool 30 has to select address book information so that it may fit within the capacity of the image formation apparatus 20 that is the storing destination. However, if the range of encryption of the address book information is enlarged, since the amount of the information that the manager operating the address book management tool 30 acquires decreases, process efficiency is degraded.

The range of the address book information that the address book management tool 30 should permit to be viewed and/or edited varies according to, e.g., credibility of the address book management tool 30, credibility of the manager who operates the address book management tool 30, and a policy of the address book management system 1. Here, the credibility of the address book management tool 30, the credibility of the manager who operates the address book management tool 30, and the policy of the address book management system 1 are examples of predetermined credibility. Then, the address book management system 1 of the present invention adjusts the range or the system of encryption of the address book information according to the credibility of the address book management tool 30, the credibility of the manager who operates the address book management tool 30, and the policy of the address book management system 1.

As described above, the address book management system 1 of the present invention is capable of adjusting the encryption level of the address book information according to the credibility. When the credibility is low, it is possible to make the encryption level of the address book information high such that the security level is raised; and when the credibility is high, the encryption level of the address book information is lowered such that the process efficiency is raised. Consequently, the address book management system 1 provides an appropriate adjustment for balancing between the security level and process efficiency of the address book information.

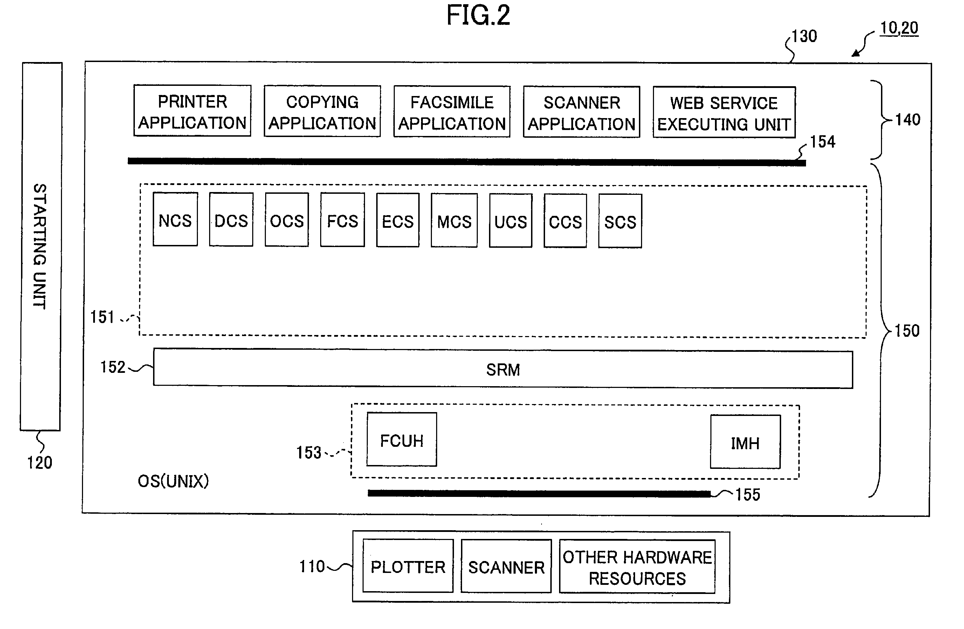

Next, the configuration of an example of the image formation apparatuses 10 and 20 is described. Fig. 2 is a block diagram of an embodiment of the image formation apparatus of the present invention. Each of the image formation apparatuses 10 and 20 includes hardware resources 110, a starting unit 120, and a software group 130.

The hardware resources 110 include a plotter, a scanner, and other hardware resources. The software group 130 includes applications 140 and a platform 150 that are executed on an OS (operating system) such as UNIX (registered trademark). The starting unit 120 is first started when the power is provided to the image formation apparatuses 10 and 20, and starts the applications 140 and the platform 150.

The applications 140 include a printer application, a copying application, a facsimile application, a scanner application, and a Web service executing unit. Further, the platform 150 includes a control service 151, an SRM (System Resource Manager) 152, and a handler layer 153. The platform 150 further includes an API (application program interface) 154.

The control service 151 includes an NCS (network control service), a DCS (delivery control service), an OCS (operation panel control service), an FCS (facsimile control service), an ECS (engine control service), an MCS (memory control service), a UCS (user information control service), a CCS (authentication control service), and an SCS (system control service).

Here, the UCS carries out a process of user information management, and the CCS carries out a process of an authentication service. The handler layer 153 includes an FCUH (facsimile control unit handler) and an IMH (image memory handler).

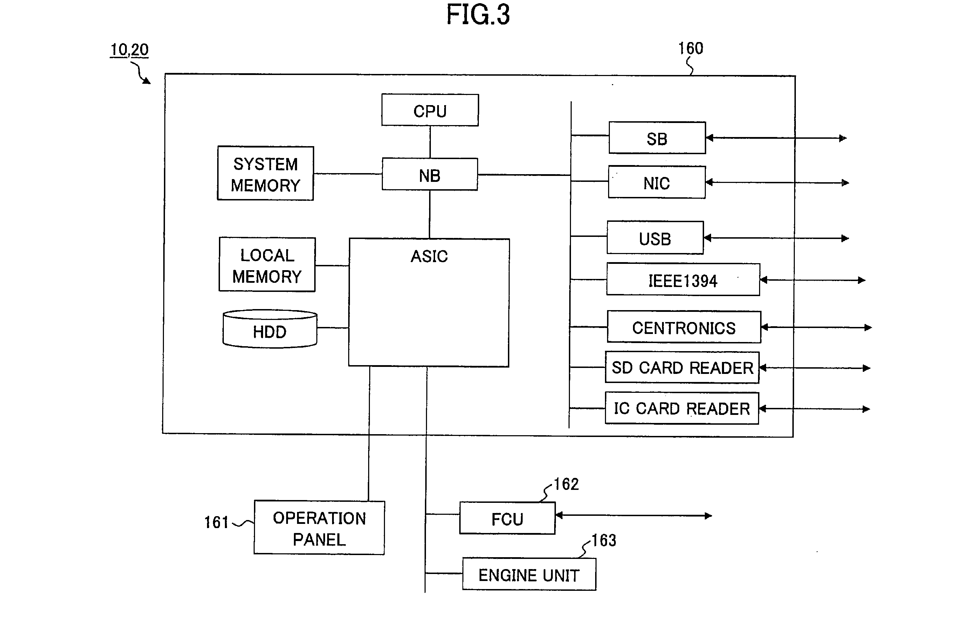

Fig. 3 is a block diagram of hardware of the image formation apparatuses 10 and 20 according to the embodiment of the present invention. Each of the image formation apparatuses 10 and 20 includes a controller 160, an operations panel 161, an FCU 162, and an engine unit 163.

The controller 160 includes a CPU, a system memory, an LM, a HDD (hard disk drive), a NB (North bridge), an ASIC, a SB (South bridge), a NIC (Network Interface Card), a USB I/F, an IEEE 1394 I/F, a Centronics I/F, an SD CR (card reader), and an IC CR (card reader). Here, I/F stands for "interface".

The function and the details of operation of each of the blocks shown in Fig. 2 and Fig. 3 that are included in the image formation apparatuses 10 and 20 are disclosed by, e.g., JPA 2002-84383. Hereafter, specific processes of the address book management system 1 of Fig. 1 are described based on the following Embodiment 1.

### [Embodiment 1]

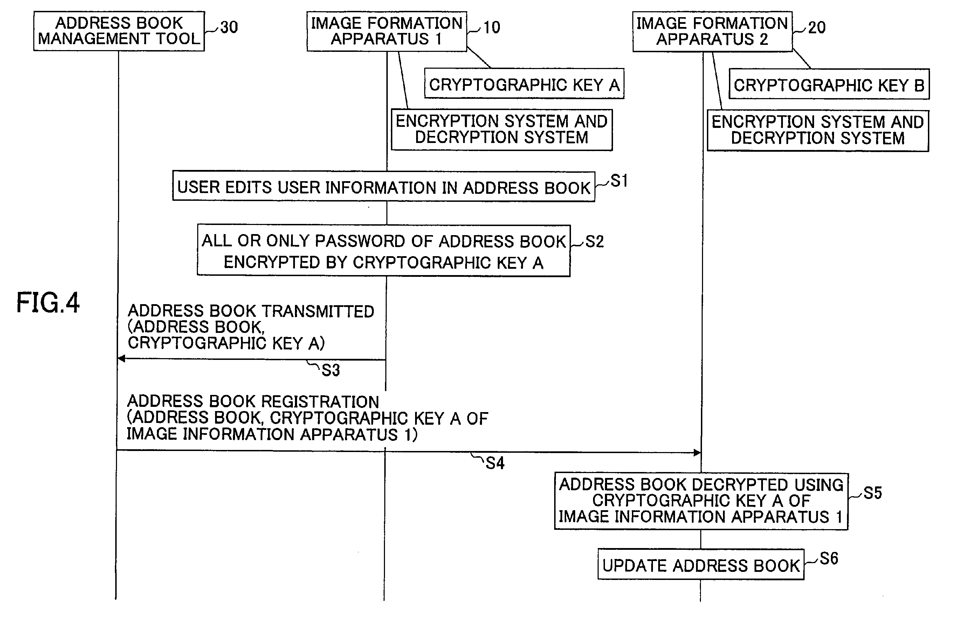

Fig. 4 is a sequence diagram showing a process carried out by the address book management system 1 according to Embodiment 1 of the present invention. The sequence diagram shows an example wherein a cryptographic key is transmitted when the address book information is transmitted. Here, it is premised that the same encryption system and decryption system are used by the image formation apparatus 10 and the image formation apparatus 20.

At Step S1, a user operates the operations panel 161 of the image formation apparatus 10 for directing the editing of the user information contained in the address book 15. In response to the direction, the Web service executing unit 12 edits the user information contained in the address book 15 through the UCS 14.

Next at Step S2, the Web service executing unit 12 determines a range of encryption, i.e., whether all of the address book information is to be encrypted, or only a password is to be encrypted; and carries out encryption within the determined range using a cryptographic key A.

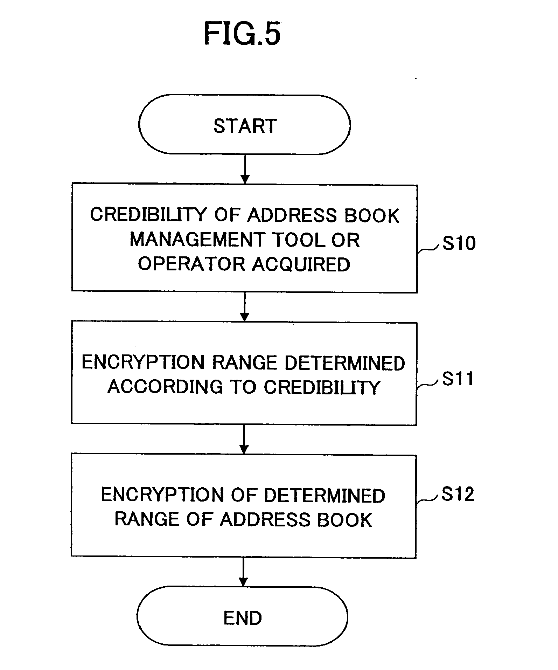

Fig. 5 is a flowchart of an example of a process of determining the range of encryption of the address book information, and encrypting within the determined range. At Step S10, the Web service executing unit 12 acquires the credibility of one of the address book management tool 30 and the manager who operates the address book management tool 30. The credibility may be acquired from a table beforehand set up in the image formation apparatus 10 or elsewhere, or from the address book management tool 30.

At Step S11, the Web service executing unit 12 determines the range of encryption of address book information, i.e., whether all the address book information is to be encrypted, or only the password (authentication information) is to be encrypted according to the acquired credibility. For example, if the credibility is low, the Web service executing unit 12 expands the range of encryption of the address book information, i.e., all the address book information. If the credibility is high, the Web service executing unit 12 narrows the range of encryption of the address book information, e.g., only the password is to be encrypted.

Progressing to Step S12, the Web service executing unit 12 acquires the address book 15 through the UCS 14, and encrypts within the determined (at Step S11) range of the address book information by using the encryption level adjusting unit 16. As described with reference to the flowchart of Fig. 5, the range of encryption of the address book information is adjusted according to the credibility of the address book management tool 30 or the manager who operates the address book management tool 30.

At Step S3 (refer to Fig. 4), the Web service executing unit 12 of the image formation apparatus 10 transmits the address book information to the address book management tool 30 through the network I/F 11 and the network 60.

The address book managing unit 32 of the address book management tool 30 receives the cryptographic key A and the address book information (wherein either all the address book information or only the password is encrypted) from the image formation apparatus 10 through the network I/F 31, the cryptographic key A having been used at Step S2.

Although the manager who operates the address book management tool 30 can backup the received address book information, he/she cannot view the information within the encrypted range of the address book information. For example, if the credibility is low, the manager of the address book management tool 30 cannot view any of the address book information. Further, if the credibility is high, the manager of the address book management tool 30 cannot view only the encrypted password.

Progressing to Step S4, the address book managing unit 32 of the address book management tool 30 performs address book registration in the image formation apparatus 20 through the network I/F 31 and the network 60. The Web service executing unit 22 of the image formation apparatus 20 receives the cryptographic key A and the address book information (wherein either all the address book information or only the password is encrypted) from the address book management tool 30 through the network I/F 21, the cryptographic key A having been used at Step S2.

Progressing to Step S5, the Web service executing unit 22 of the image formation apparatus 20 decrypts the address book information (wherein either all the address book information or only the password is encrypted) using the cryptographic key A. Here, it is premised that the encrypting system of the image formation apparatus 10 corresponds to the decrypting system of the image formation apparatus 20. Next at Step S6, the Web service executing unit 22 of the image formation apparatus 20 updates the address book 25 with the address book information that is decrypted.

As described above with reference to the sequence diagram of Fig. 4, the range of the encryption of the address book information that is transmitted to the address book management tool 30 is adjusted according to the credibility of the address book management tool 30 or the manager who operates the address book management tool 30.

### [Embodiment 2]

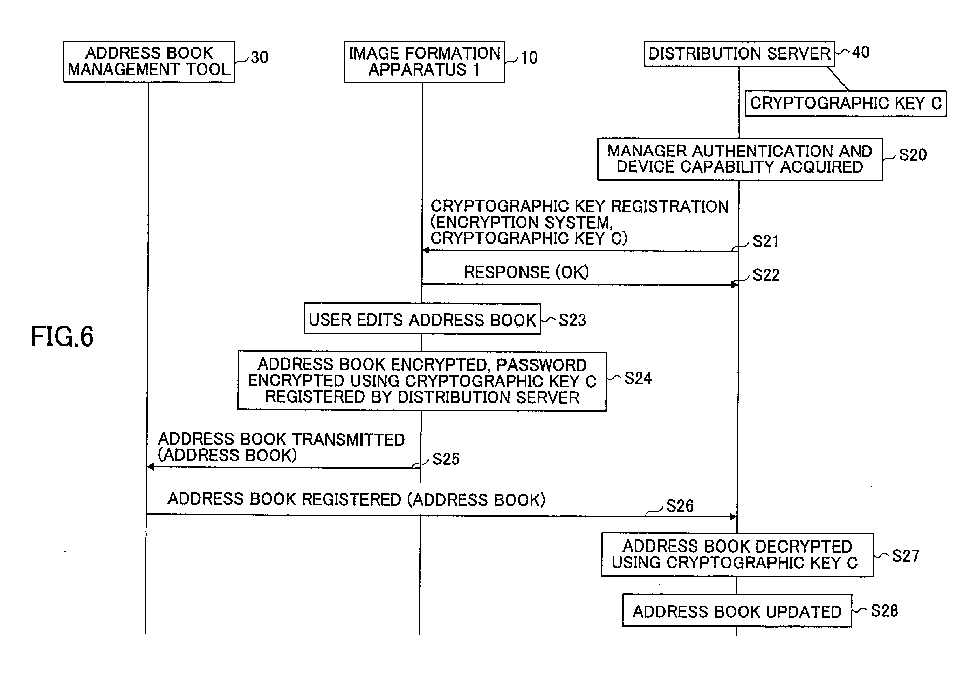

Fig. 6 is a sequence diagram showing a process carried out by the address book management system 1 according to Embodiment 2 of the present invention. The sequence diagram shows an example wherein a cryptographic key C of the distribution server 40 serves as a common cryptographic key (henceforth a common key). Here, the distribution server 40 may be served by (included in) the image formation apparatus 20.

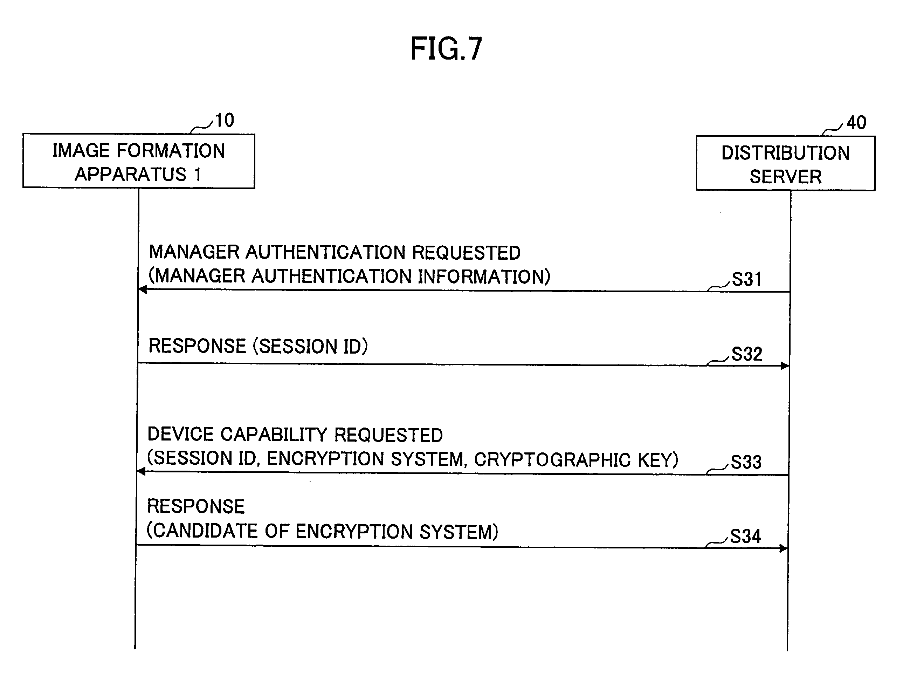

At Step S20, the distribution server 40 performs a manager authentication process and a device capability acquisition process. Fig. 7 is a sequence diagram of an example of the manager authentication process and the device capability acquisition process.

Progressing to Step S31, the distribution module 42 of the distribution server 40 transmits a manager authentication request to the image formation apparatus 10 through the network I/F 41 and the network 60. Manager authentication information is included in the manager authentication request at Step S31. When the manager authentication request is received from the distribution server 40 through the network I/F 11, the Web service executing unit 12 of the image formation apparatus 10 carries out the authentication process on the manager authentication information included in the manager authentication request by using the CCS 13.

If the authentication process of the manager authentication information is successfully completed, the Web service executing unit 12 of the image formation apparatus 10 establishes a session with the distribution module 42 of the distribution server 40, and generates an identification of the session (session ID). Progressing to Step S32, the Web service executing unit 12 of the image formation apparatus 10 transmits a response to the manager authentication request issued by Step S31 to the distribution server 40 through the network I/F 11 and the network 60. The generated session ID is included in the response at Step S32. The distribution module 42 of the distribution server 40 acquires the session ID from the image formation apparatus 10 through the network I/F 41.

Progressing to Step S33, the distribution module 42 of the distribution server 40 transmits the device capability acquisition request to the image formation apparatus 10 through the network I/F 41 and the network 60. The device capability acquisition request at Step S33 includes the session ID acquired at Step S32, information about available encryption systems, and the cryptographic key. In addition, when the cryptographic key is transmitted, the transmission is assumed to be protected by SSL (Secure Sockets Layer), and the like.

When the device capability acquisition request is received from the distribution server 40 through the network I/F 11, the Web service executing unit 12 of the image formation apparatus 10 selects one of the available encryption systems.

Progressing to Step S34, the Web service executing unit 12 of the image formation apparatus 10 transmits the response to the device capability acquisition request issued at Step S33 to the distribution server 40 through the network I/F 11 and the network 60. Information about the selected encryption system is contained in the response issued at Step S34.

If the selected encryption system, the information about which is contained in the response of Step S34, is acceptable to the distribution module 42 of the distribution server 40, the process progresses to Step S21 (refer to Fig. 6), and a cryptographic key registration request is provided to the image formation apparatus 10 through the network I/F 41 and the network 60. The cryptographic key registration request at Step S21 contains the information about the encryption system and the cryptographic key C.

If the cryptographic key registration process is successfully completed, the process progresses to Step S22, wherein the Web service executing unit 12 of the image formation apparatus 10 transmits the response to the cryptographic key registration request issued at Step S21 to the distribution server 40 through the network I/F 11 and the network 60. The information (for example, OK) indicating that the cryptographic key registration request of Step S21 has been successfully completed is included in the response of Step S22.

Then, the process progresses to Step S23, wherein the direction to edit the user information included in the address book 15 is issued by the operations panel 161, and the Web service executing unit 12 edits the user information in the address book 15 through the UCS 14. Then, at Step S24, the Web service executing unit 12 determines the range of encryption, i.e., whether only the password is to be encrypted, or all the address book information is to be encrypted, and carries out encryption within the determined range using the cryptographic key C that is registered by the distribution server 40, as in the case shown by the flowchart shown by Fig. 5.

At Step S25, the Web service executing unit 12 of the image formation apparatus 10 transmits the address book information to the address book management tool 30. The address book managing unit 32 of the address book management tool 30 receives the address book information, wherein either all the address book information or only the password is encrypted, from the image formation apparatus 10.

The manager who operates the address book management tool 30 can backup the received address book information; however, he/she cannot view information within the encrypted range of the address book information. At Step S26, the address book managing unit 32 of the address book management tool 30 performs address book registration in the distribution server 40. The distribution module 42 of the distribution server 40 receives the address book information, wherein either all the address book information or only the password is encrypted, from the address book management tool 30.

Progressing to Step S27, the distribution module 42 of the distribution server 40 decrypts the address book information, wherein either all the address book information or only the password is encrypted, using the cryptographic key C. Progressing to Step S28, the distribution module 42 of the distribution server 40 updates the address book 43 with the decrypted address book information. The distribution module 42 updates the address book 43 through the authentication unit 44.

As described above with reference to the sequence diagram of Fig. 6, the range of the encryption of the address book information that is to be transmitted to the address book management tool 30 is adjusted according to the credibility of the address book management tool 30 or the manager who operates the address book management tool 30.

### [Embodiment 3]

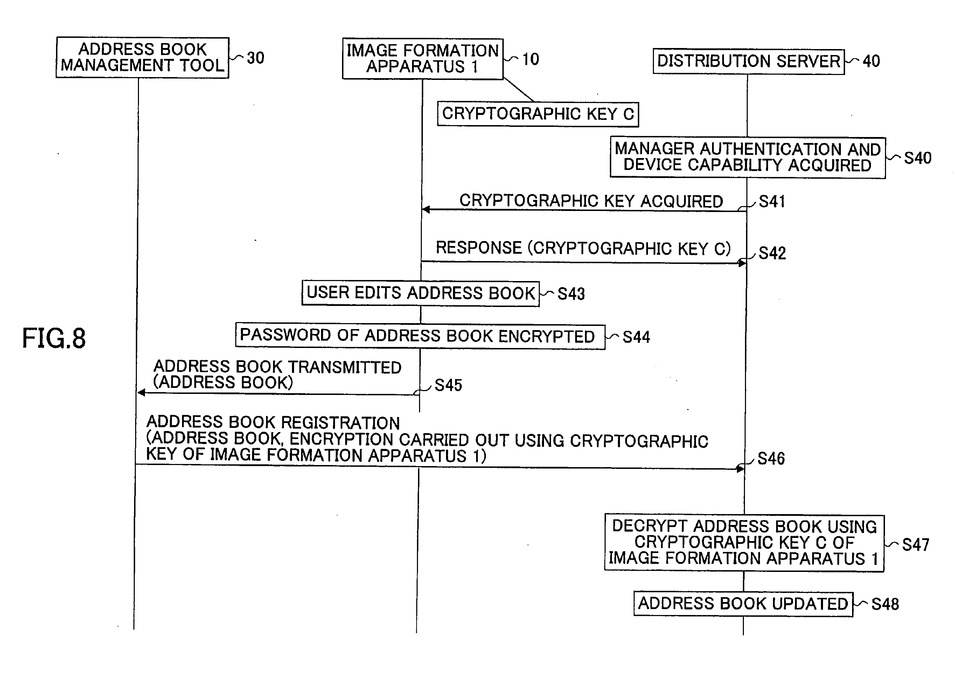

Fig. 8 is a sequence diagram showing a process carried out by the address book management system 1 according to the Embodiment 3 of the present invention. The sequence diagram shows an example wherein the cryptographic key C of the image formation apparatus 10 serves as a common key. Here, the distribution server 40 may be served by the image formation apparatus 20.

At Step S40, the distribution server 40 performs the manager authentication process and the device capability acquisition process as shown in the flowchart of Fig. 7. Progressing to Step S41, the distribution module 42 of the distribution server 40 issues the cryptographic key acquisition request to the image formation apparatus 10 through the network I/F 41 and the network 60.

Progressing to Step S42, the Web service executing unit 12 of the image formation apparatus 10 transmits the response to the cryptographic key acquisition request issued at Step S41 to the distribution server 40 through the network I/F 11 and the network 60. The cryptographic key C of the image formation apparatus 10 is contained in the response of Step S42.

At Step S43, if editing of the user information contained in the address book 15 is directed from the operations panel 161, the Web service executing unit 12 edits the user information in the address book 15 through the UCS 14. Progressing to Step S44, as shown by the flowchart of Fig. 5, the Web service executing unit 12 determines the range of encryption of the address book information, i.e., whether all the address book information is to be encrypted or only the password is to be encrypted; and carries out encryption of the determined range using the cryptographic key C.

At Step S45, the Web service executing unit 12 of the image formation apparatus 10 transmits the address book information to the address book management tool 30. The address book managing unit 32 of the address book management tool 30 receives the address book information, wherein either all the address book information or only the password is encrypted, from the image formation apparatus 10.

Although the manager who operates the address book management tool 30 can backup the received address book information, he/she cannot view the information in the encrypted range of the address book information. Progressing to Step S46, the address book managing unit 32 of the address book management tool 30 performs address book registration in the distribution server 40. The distribution module 42 of the distribution server 40 receives the address book information, wherein either all the address book information or only the password is encrypted, and the information indicating the cryptographic key C that is used for encryption from the address book management tool 30.

At Step S47, the distribution module 42 of the distribution server 40 decrypts the address book information, wherein either all the address book information or only the password is encrypted, using the cryptographic key C. Progressing to Step S48, the distribution module 42 of the distribution server 40 updates the address book 43 with the decrypted address book information. The distribution module 42 updates the address book 43 through the authentication unit 44.

As described with reference to the sequence diagram of Fig. 8, the range of encryption of the address book information to be transmitted to the address book management tool 30 is adjusted according to the credibility of the address book management tool 30 or the manager who operates the address book management tool 30.

### [Embodiment 4]

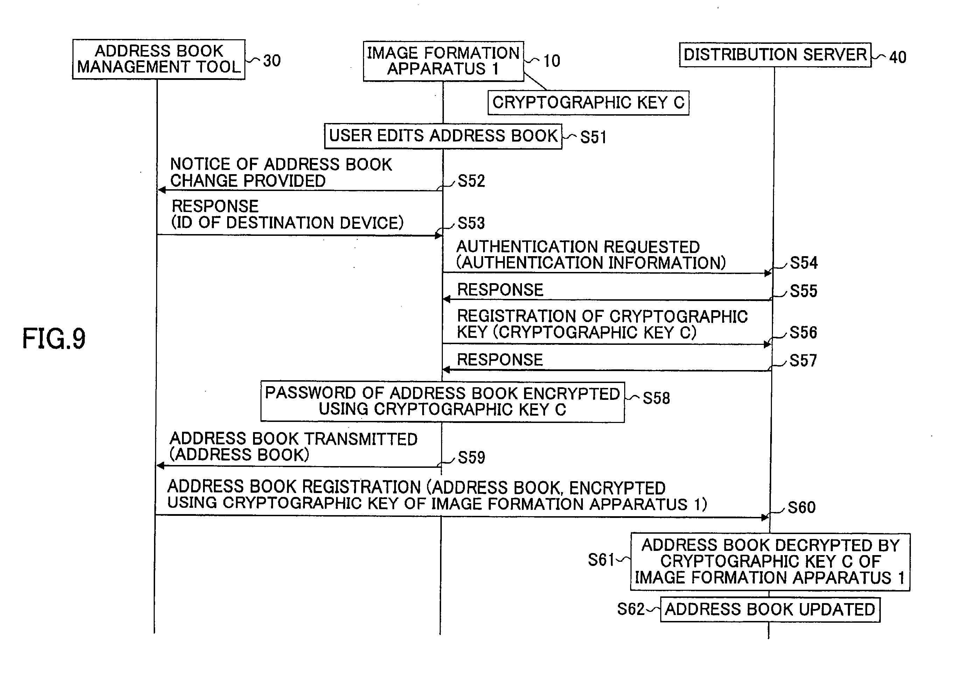

Fig. 9 is a sequence diagram showing a process carried out by the address book management system 1 according to Embodiment 4 of the present invention. The sequence diagram shows an example using the cryptographic key C of the image formation apparatus 10 as the common key in response to a direction from the address book management tool 30. Here, the distribution server 40 may be served by the image formation apparatus 20.

Progressing to Step S51, if editing of the user information contained in the address book 15 is directed from the operations panel 161, the Web service executing unit 12 edits the user information in the address book 15 through the UCS 14. Progressing to Step S52, the Web service executing unit 12 provides a notice of address book change to the address book management tool 30.

If the notice of address book change is received from the image formation apparatus 10, the address book managing unit 32 of the address book management tool 30 acquires an ID of the addressed device from the address book management information 34. The address book managing unit 32 transmits the response to the notice of address book change issued at Step S52 to the Web service executing unit 12 of the image formation apparatus 10. The ID of the addressed device is contained in the response at Step S53.

If the ID of the addressed device is acquired from the address book management tool 30, the process progresses to Step S54, wherein the Web service executing unit 12 of the image formation apparatus 10 issues the authentication request for registering the cryptographic key C in the distribution server 40. The authentication request at Step S54 includes authentication information for performing authentication of the user who has edited the address book 15, or authentication of the image formation apparatus 10. The distribution module 42 of the distribution server 40 performs the authentication process concerning the authentication information included in the authentication request by the authentication unit 44, if the authentication request is received from the image formation apparatus 10.

If the authentication process concerning the authentication information is successfully completed, the distribution module 42 transmits a response to the Web service executing unit 12 of the image formation apparatus 10. At Step S56, the Web service executing unit 12 issues a cryptographic key registration request to the distribution server 40. The cryptographic key C is contained in the cryptographic key registration request at Step S56.

At Step S57, if the registration process concerning the cryptographic key is successfully completed, the distribution module 42 of the distribution server 40 transmits the response to the cryptographic key registration request issued at Step S56 to the Web service executing unit 12 of the image formation apparatus 10. Here, the process of Steps S58 through S62 is the same as that of Steps S44 through S48 of Fig. 8, the description thereof is not repeated.

As described above with reference to the sequence diagram of Fig. 9, the range of encryption of address book information that is to be transmitted to the address book management tool 30 is adjusted according to the credibility of the address book management tool 30 or the manager who operates the address book management tool 30.

### [Embodiment 5]

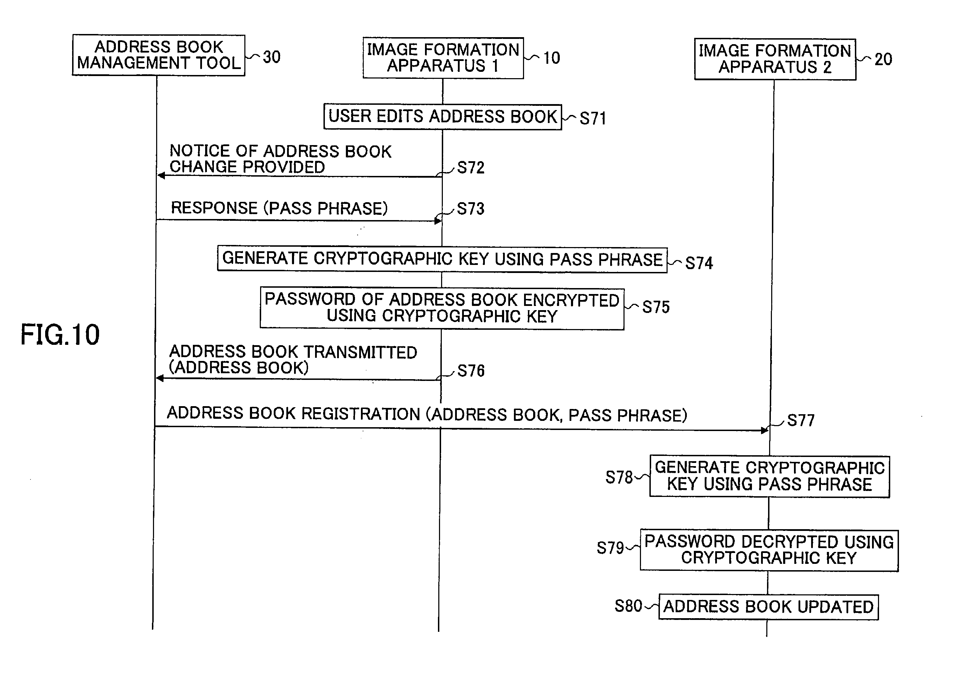

Fig. 10 is a sequence diagram showing a process carried out by the address book management system 1 according to Embodiment 5 of the present invention. The sequence diagram shows an example wherein the address book management tool 30 sets up a pass phrase when transmitting the address book information. Here, the image formation apparatus 20 may be served by the distribution server 40.

At Step S71, if editing the user information contained in the address book 15 is directed from the operations panel 161, the Web service executing unit 12 edits the user information in the address book 15 through the UCS 14. Progressing to Step S72, the Web service executing unit 12 provides a notice of address book change to the address book management tool 30.

If the notice of address book change is received from the image formation apparatus 10, the address book managing unit 32 of the address book management tool 30 sets up a pass phrase. The address book managing unit 32 transmits the response to the notice of address book change issued at Step S72 to the Web service executing unit 12 of the image formation apparatus 10. The pass phrase is contained in the response of Step S73.

If the pass phrase is acquired from the address book management tool 30, the process progresses to Step S74, wherein the Web service executing unit 12 generates a cryptographic key based on the pass phrase. Then, at Step S75, the Web service executing unit 12 determines the range of encryption of the address book information, i.e., whether all the address book information is to be encrypted or only the password is to be encrypted; and performs encryption within the determined range using the cryptographic key generated at Step S74, as in the case shown by the flowchart shown in Fig. 5.

Progressing to Step S76, the Web service executing unit 12 of the image formation apparatus 10 transmits the address book information to the address book management tool 30. The address book managing unit 32 of the address book management tool 30 receives the address book information, wherein either all the address book information or only the password is encrypted, from the image formation apparatus 10.

Although the manager who operates the address book management tool 30 can backup the received address book information, he/she cannot view the information in the encrypted range of the address book information. Progressing to Step S77, the address book managing unit 32 of the address book management tool 30 performs address book registration in the Web service executing unit 22 of the image formation apparatus 20. The Web service executing unit 22 receives the address book information, wherein either all the address book information or only the password is encrypted, and the pass phrase from the address book management tool 30.

Progressing to Step S78, the Web service executing unit 22 generates a cryptographic key based on the pass phrase that is received. At Step S79, the Web service executing unit 22 decrypts the address book information, wherein either all the address book information or only the password is encrypted, using the cryptographic key generated at Step S78. Progressing to Step S80, the Web service executing unit 22 updates the address book 25 with the decrypted address book information. The Web service executing unit 22 updates the address book 25 through the UCS 24.

As described above with reference to the sequence diagram of Fig. 10, the range of encryption of the address book information to be transmitted to the address book management tool 30 is adjusted according to the credibility of the address book management tool 30 or the manager who operates the address book management tool 30.

### [Embodiment 6]

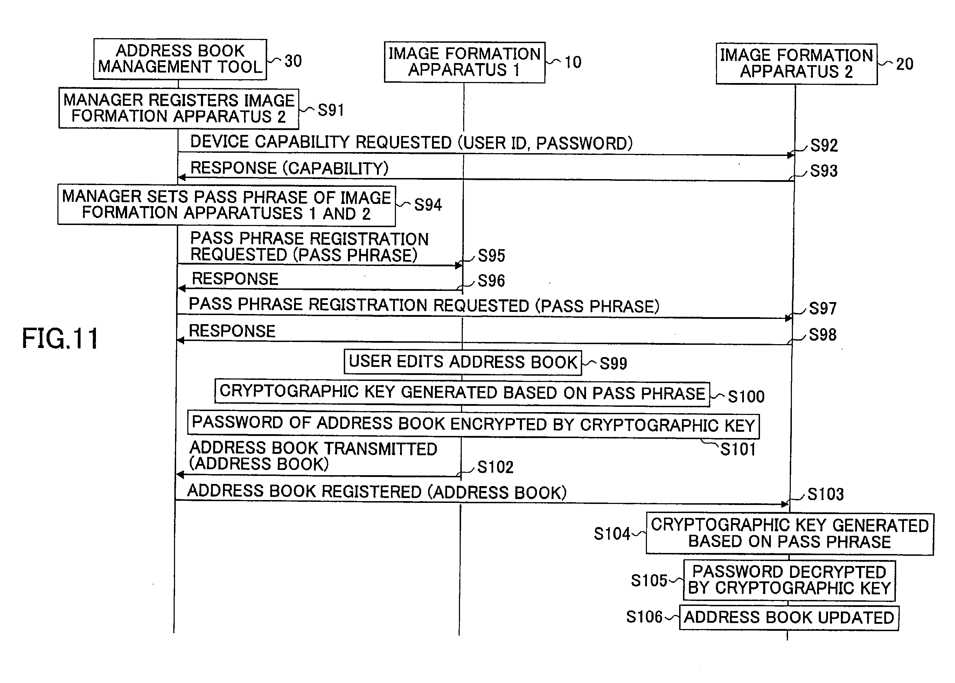

Fig. 11 is a sequence diagram showing a process carried out by the address book management system 1 according to Embodiment 6 of the present invention. The sequence diagram shows an example wherein the address book management tool 30 sets up a pass phrase at the time of device registration. Here, the image formation apparatus 20 may be served by the distribution server 40.

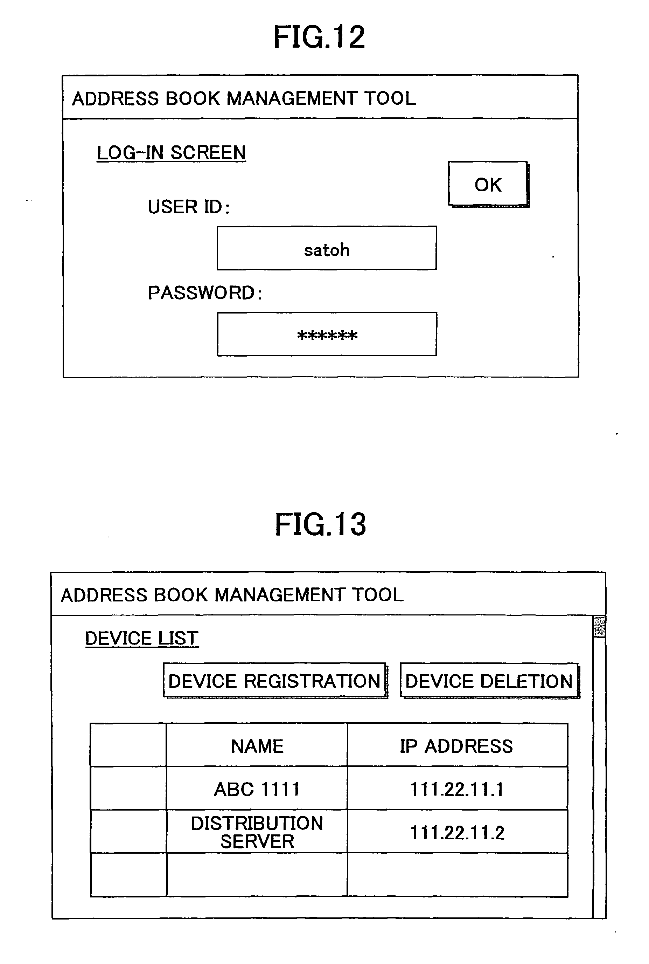

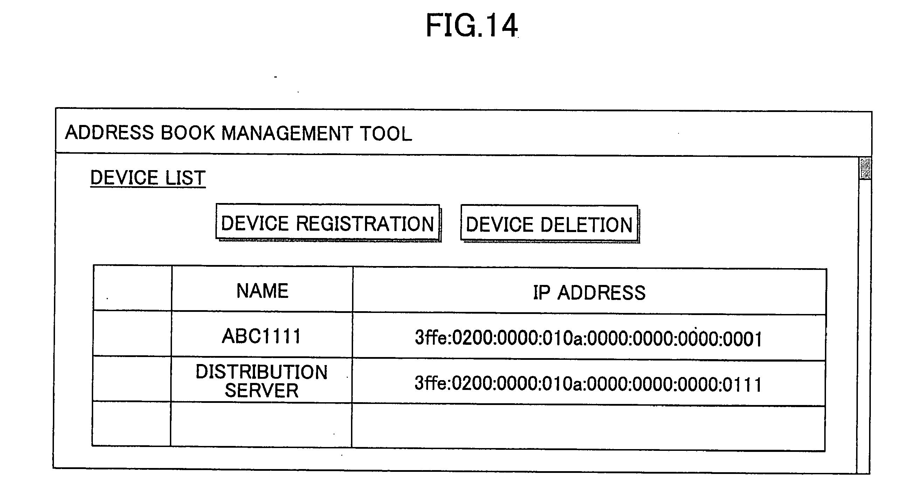

First, the manager who operates the address book management tool 30 inputs a user ID and a password to a manager authentication screen as shown in Fig. 12 displayed on the user I/F 35, and performs the authentication process. Fig. 12 is an example of the manager authentication screen. If the authentication process is successfully completed, the address book managing unit 32 of the address book management tool 30 displays a device list screen such as shown in Fig. 13 and Fig. 14 on the user I/F 35.

Fig. 13 shows an example of a device list screen when using IPv4. Fig. 14 is an example of a device list screen when using IPv6. For example, when registering the image formation apparatus 20 as a new device, the manager pushes a device registration button in the device list screen shown in Fig. 13 or Fig. 14, as applicable, displayed on the user I/F 35.

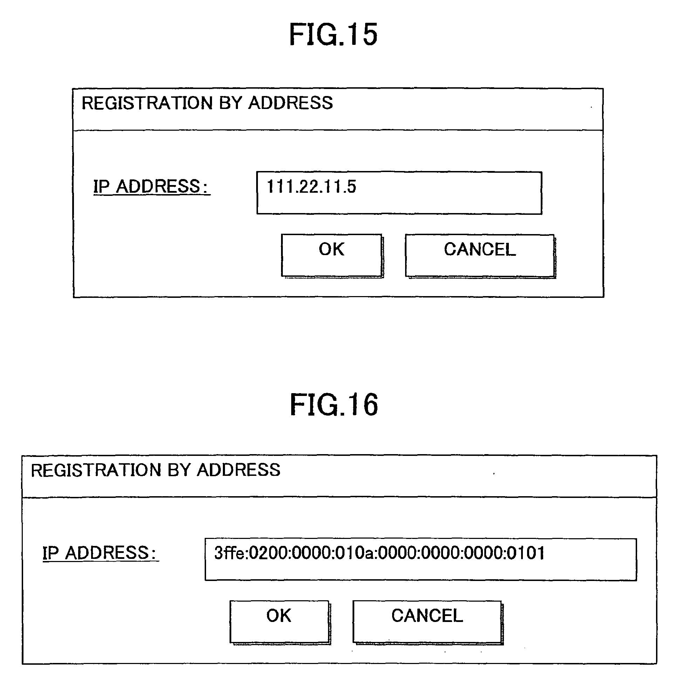

If the device registration button is pushed, the address book managing unit 32 displays the device registration screen as shown in Fig. 15 or Fig. 16, as applicable, on the user I/F 35. Fig. 15 shows an example in the case of IPv4. Fig. 16 shows an example in the case of IPv6.

Progressing to Step S91, the manager registers the IP address of the image formation apparatus 20 using the device registration screen of Fig. 15 or Fig. 16, as applicable, displayed on the user I/F 35. If the IP address of the image formation apparatus 20 is registered, the process progresses to Step S92 wherein the address book managing unit 32 transmits the device capability acquisition request to the Web service executing unit 22 of the image formation apparatus 20. The user ID and the password are contained in the device capability acquisition request of Step S92.

Progressing to Step S93, the Web service executing unit 22 transmits a response to the device capability acquisition request issued at Step S92 to the address book managing unit 32 of the address book management tool 30. Device capability is contained in the response of Step S93.

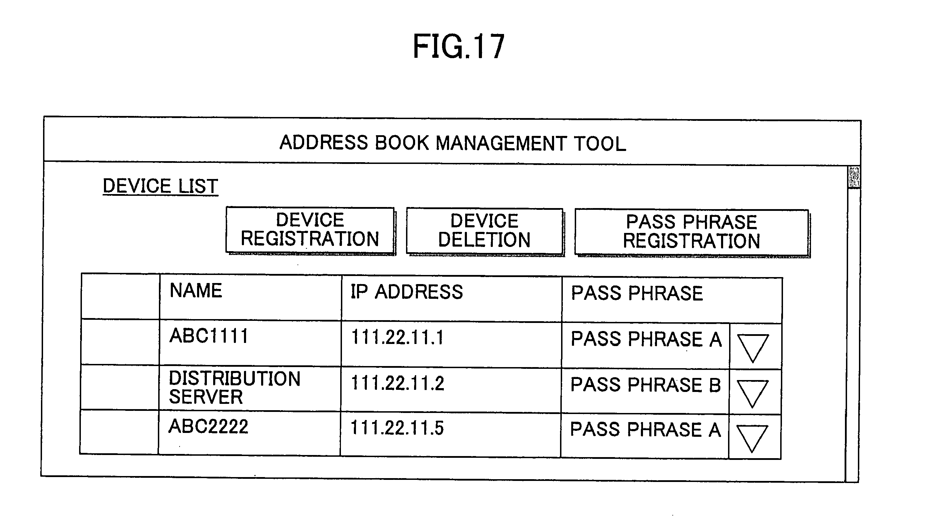

If the response to the device capability acquisition request issued at Step S92 is received, the address book managing unit 32 displays a pass phrase list screen as shown in Fig. 17 on the user I/F 35. Fig. 17 is an example of the pass phrase list screen. Progressing to Step S94, the manager pushes the pass phrase registration button of the pass phrase list screen of Fig. 17 displayed on the user I/F 35, and sets up the pass phrase of the image formation apparatuses 10 and 20.

Progressing to Step S95, the address book managing unit 32 issues a pass phrase registration request to the Web service executing unit 12 of the image formation apparatus 10. The pass phrase is contained in the pass phrase registration request of Step S95. At Step S96, if the registration process of the pass phrase is successfully completed, the Web service executing unit 12 transmits the response to the pass phrase registration request of Step S95 to the address book managing unit 32 of the address book management tool 30.

Progressing to Step S97, the address book managing unit 32 issues the pass phrase registration request to the Web service executing unit 22 of the image formation apparatus 20. The pass phrase is contained in the pass phrase registration request of Step S97. At Step S98, if the registration process of the pass phrase is successfully completed, the Web service executing unit 22 transmits the response to the pass phrase registration request of Step S97 to the address book managing unit 32 of the address book management tool 30.

Progressing to Step S99, if editing is directed from the operations panel 161 concerning the user information contained in the address book 15, the Web service executing unit 12 of the image formation apparatus 10 edits the user information in the address book 15 through the UCS 14. Progressing to Step S100, the Web service executing unit 12 generates a cryptographic key based on the pass phrase registered at Step S95.

Progressing to Step S101, the Web service executing unit 12 determines the range of encryption of address book information, i.e., whether all the address book information is to be encrypted or only the password is to be encrypted; and encrypts the information within the determined range using the cryptographic key generated at Step S100, as in the case shown by the flowchart of Fig. 5.

Progressing to Step S102, the Web service executing unit 12 of the image formation apparatus 10 transmits the address book information to the address book management tool 30. The address book managing unit 32 of the address book management tool 30 receives the address book information, wherein either all the address book information or only the password is encrypted, from the image formation apparatus 10.

Although the manager who operates the address book management tool 30 can backup the received address book information, he/she cannot view the information within the encrypted range of the address book information. Progressing to Step S103, the address book managing unit 32 of the address book management tool 30 performs address book registration in the Web service executing unit 22 of the image formation apparatus 20. The Web service executing unit 22 receives the address book information, wherein either the whole address book information or only the password is encrypted, from the address book management tool 30.

Progressing to Step S104, the Web service executing unit 22 generates a cryptographic key based on the pass phrase registered at Step S97. At Step S105, the Web service executing unit 22 decrypts the address book information, wherein either all the address book information or only the password is encrypted using the cryptographic key generated at Step S104. Progressing to Step S106, the Web service executing unit 22 updates the address book 25 with the decrypted address book information. The Web service executing unit 22 updates the address book 25 through the UCS 24.

As described with reference to the sequence diagram of Fig. 11, the range of encryption of the address book information that is to be transmitted to the address book management tool 30 is adjusted according to the credibility of the address book management tool 30 or the manager who operates the address book management tool 30.

### [Embodiment 7]

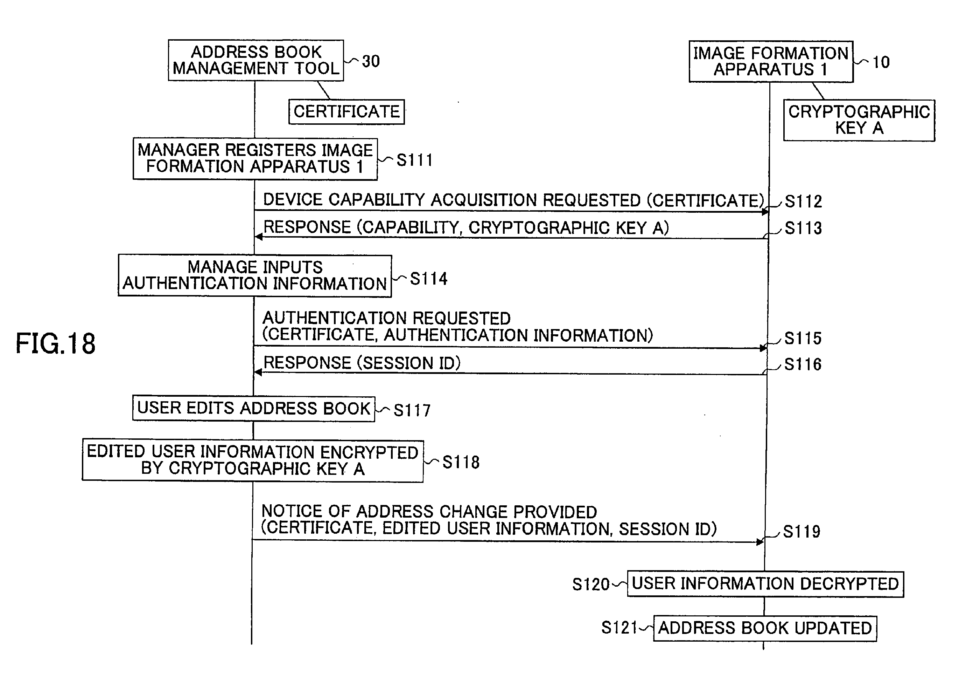

Fig. 18 is a sequence diagram showing a process carried out by the address book management system 1 according to Embodiment 7 of the present invention. The sequence diagram shows an example wherein the address book management tool 30 edits the address book. Here, it is premised that the address book management tool 30 has a certificate evidencing that its credibility is high.

First, the manager who operates the address book management tool 30 registers the image formation apparatus 10 as described above. If the image formation apparatus 10 is registered, the address book managing unit 32 transmits the device capability acquisition request to the Web service executing unit 12 of the image formation apparatus 10 at Step S112. The certificate is contained in the device capability acquisition request of Step S112.

Progressing to Step S113, the Web service executing unit 12 transmits the response to the device capability acquisition request issued at Step S112 to the address book managing unit 32 of the address book management tool 30. The device capability and the cryptographic key A of the image formation apparatus 10 are contained in the response of Step S113.

At Step S114, the manager inputs authentication information (password) as described above. If the authentication information is input, the address book managing unit 32 transmits an authentication request to the Web service executing unit 12 of the image formation apparatus 10 at Step S115. The certificate and authentication information are included in the authentication request of Step S115.

If the authentication request is received, the Web service executing unit 12 of the image formation apparatus 10 carries out the authentication process concerning the certificate and the authentication information contained in the authentication request by the CCS 13. If the authentication process is successfully completed, the Web service executing unit 12 establishes a session with the address book managing unit 32 of the address book management tool 30, and generates a session ID of the session. Progressing to Step S116, the Web service executing unit 12 transmits the response to the authentication request issued at Step S115 to the address book management tool 30. The generated session ID is contained in the response of Step S116.

At Step S117, if editing of the address book is directed, the address book managing unit 32 of the address book management tool 30 edits the user information in the address book. Progressing to Step S118, the address book managing unit 32 of the address book management tool 30 encrypts the edited user information by the cryptographic key A of the image formation apparatus 10.

Progressing to Step S119, the address book managing unit 32 provides a notice of address book change to the Web service executing unit 12 of the image formation apparatus 10. The certificate, the edited user information, and the session ID are contained in the notice of address book change issued at Step S119. Progressing to Step S120, the Web service executing unit 12 decrypts the edited user information using the cryptographic key A.

Progressing to Step S121, the Web service executing unit 12 updates the address book 15 with the decrypted user information. The Web service executing unit 12 updates the address book 15 through the UCS 14. In addition, at Step S120, if the address book management tool 30 with the certificate is spoofing, since the encryption systems differ, decryption cannot be carried out.

As described with reference to the sequence diagram of Fig. 18, the address book is edited by the address book management tool 30 having high credibility.

### [Embodiment 8]

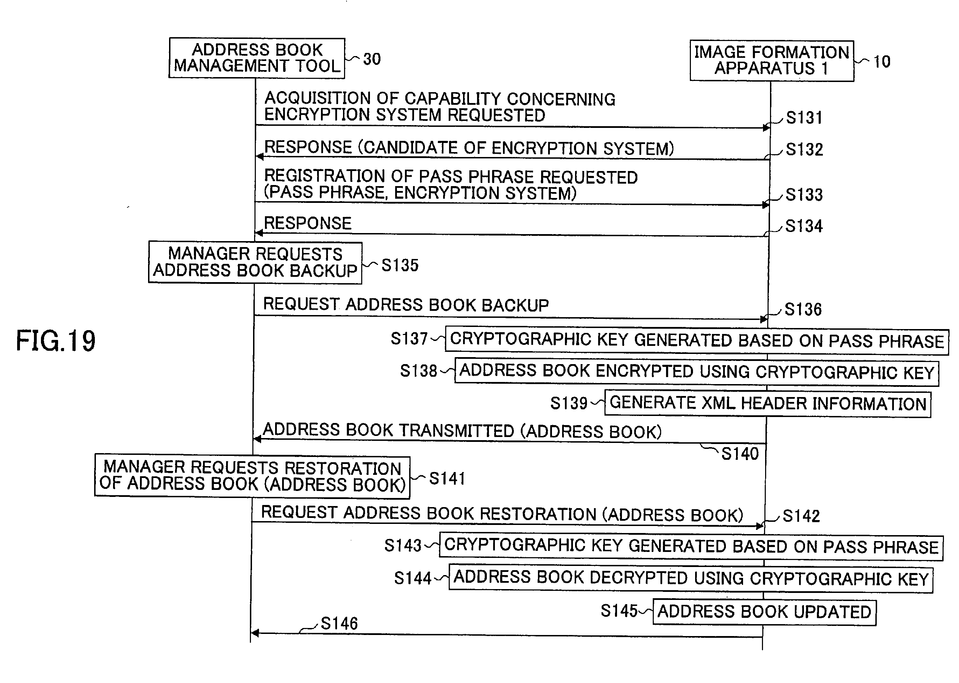

Fig. 19 is a sequence diagram showing a process carried out by the address book management system 1 according to Embodiment 8 of the present invention. The sequence diagram shows an example wherein a pass phrase is provided to the image formation apparatus 10, and the address book information is shared using a backup/restoration function of the address book management tool 30.

At Step S131, the address book managing unit 32 of the address book management tool 30 transmits the device capability acquisition request concerning encryption systems to the Web service executing unit 12 of the image formation apparatus 10. If the device capability acquisition request concerning the encryption systems is received, the Web service executing unit 12 selects a candidate for the encryption system. Progressing to Step S132, the Web service executing unit 12 transmits the response to the device capability acquisition request issued at Step S131 to the address book managing unit 32 of the address book management tool 30. The selected candidate encryption system is contained in the response of Step S132.

Progressing to Step S133, the address book managing unit 32 issues a pass phrase registration request to the Web service executing unit 12 of the image formation apparatus 10. The pass phrase and the selected encryption system are contained in the pass phrase registration request of Step S133. At Step S134, if the registration process of the pass phrase is successfully completed, the Web service executing unit 12 transmits the response to the pass phrase registration request issued at Step S133 to the address book managing unit 32 of the address book management tool 30.

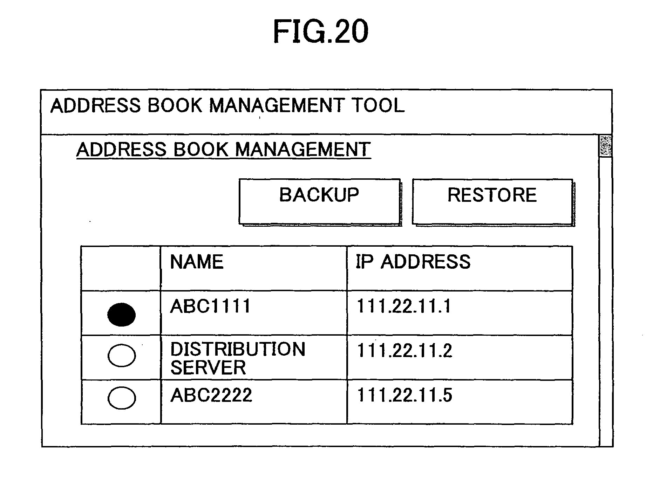

Progressing to Step S135, the manager who operates the address book management tool 30 selects a device for the address book backup from an address book operation screen as shown in Fig. 20 displayed on the user I/F 35, and pushes the backup button. Fig. 20 is an example of the address book operation screen. If the backup button is pushed, the process progresses to Step S136, and the address book managing unit 32 issues an address book backup request to the Web service executing unit 12 of the image formation apparatus 10.

At Step S137, if the address book backup request is received, the Web service executing unit 12 generates the cryptographic key based on the pass phrase registered beforehand. Here, the pass phrase used at Step S137 may be transmitted to the image formation apparatus 10 from the address book management tool 30 when the address book backup request is issued at Step S136.

Progressing to Step S138, the Web service executing unit 12 determines the range of encryption of the address book information, i.e., whether all the address book information is to be encrypted or only the password is to be encrypted; and encrypts the information within the range using the cryptographic key generated at Step S137, as in the case shown by the flowchart of Fig. 5.

Progressing to Step S139, the Web service executing unit 12 generates header information in XML (extensible Markup Language). Progressing to Step S140, the Web service executing unit 12 transmits the address book information to the address book managing unit 32 of the address book management tool 30. The address book managing unit 32 receives the address book information, wherein either all the address book information or only the password is encrypted, from the image formation apparatus 10.

Although the manager who operates the address book management tool 30 can backup the received address book information, he/she cannot view the information within the encrypted range of the address book information.

Progressing to Step S141, the manager who operates the address book management tool 30 selects a device that should restore the address book from the address book operation screen displayed on the user I/F 35 as shown in Fig. 20, and pushes the restoration button. If the restoration button is pushed, the address book managing unit 32 issues an address book restoration request to the Web service executing unit 12 of the image formation apparatus 10 at Step S142. The address book information is included in the address book restoration request of Step S142.

If the address book restoration request is received, the Web service executing unit 12 generates a cryptographic key based on the pass phrase registered beforehand at Step S143. Here, the pass phrase used at Step S143 may be transmitted to the image formation apparatus 10 from the address book management tool 30 when the address book restoration request is issued at Step S142.

Progressing to Step S144, the Web service executing unit 12 carries out decryption of the address book information included in the address book restoration request by the cryptographic key generated at Step S143. Progressing to Step S145, the Web service executing unit 12 updates the address book 15 with the decrypted address book information. The Web service executing unit 12 updates the address book 15 through the UCS 14. Progressing to Step S146, the Web service executing unit 12 transmits the response to the address book restoration request issued at Step S142 to the address book managing unit 32 of the address book management tool 30.

As described above with reference to the sequence diagram of Fig. 19, the range of encryption of the address book information that is to be transmitted to the address book management tool 30 at the time of backup restoration can be adjusted according to the credibility of the address book management tool 30 or the manager who operates the address book management tool 30.

### [Embodiment 9]

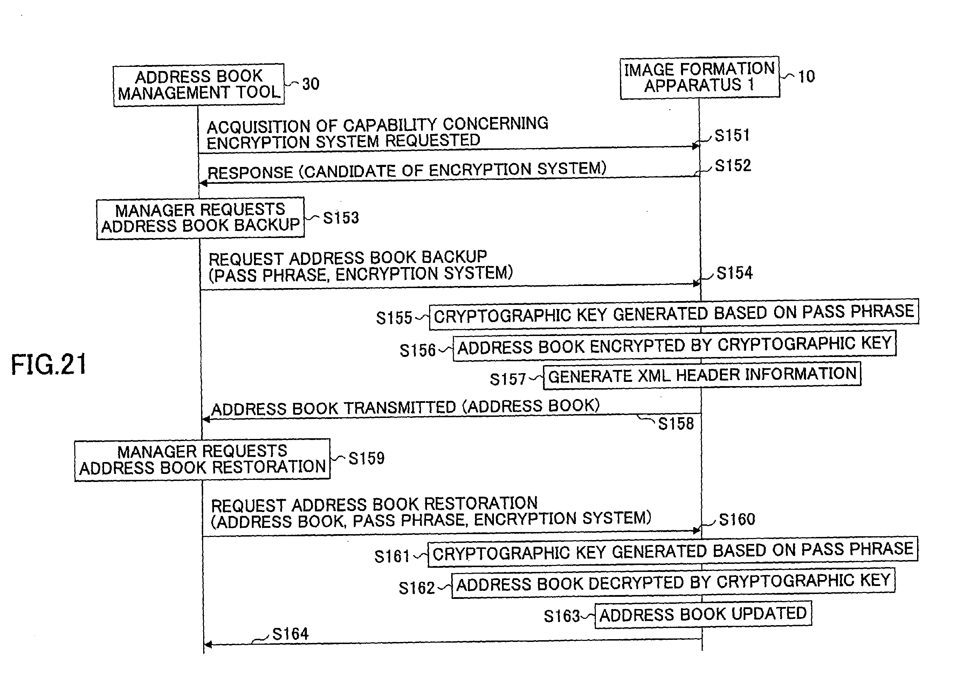

Fig. 21 is a sequence diagram showing a process carried out by the address book management system 1 according to Embodiment 9 of the present invention. The sequence diagram shows another example wherein the pass phrase is provided to the image formation apparatus 10, and the address book information is shared using the backup/restoration function of the address book management tool 30.

At Step S151, the address book managing unit 32 of the address book management tool 30 transmits the device capability acquisition request concerning the encryption system to the Web service executing unit 12 of the image formation apparatus 10. If the device capability acquisition request concerning the encryption system is received, the Web service executing unit 12 selects a candidate for the encryption system. Progressing to Step S152, the Web service executing unit 12 transmits the response to the device capability acquisition request issued at Step S151 to the address book managing unit 32 of the address book management tool 30. Information about the candidate encryption system is contained in the response of Step S152.

Progressing to Step S153, the manager who operates the address book management tool 30 selects a device for the address book backup from the address book operation screen as shown in Fig. 20 displayed on the user I/F 35, and pushes the backup button. If the backup button is pushed, the address book managing unit 32 issues an address book backup request to the Web service executing unit 12 of the image formation apparatus 10 at Step S154. The pass phrase and the information about the selected encryption system are contained in the address book backup request of Step S154.

If the address book backup request is received, the Web service executing unit 12 generates a cryptographic key based on the pass phrase contained in the address book backup request at Step S155. Then, at Step S156, the Web service executing unit 12 determines the range of encryption of the address book information, i.e., whether all the whole address book information is to be encrypted or only the password is to be encrypted; and encrypts the information within the range using the cryptographic key that is generated at Step S155, as in the case shown by the flowchart of Fig. 5.

Progressing to Step S157, the Web service executing unit 12 generates the header information in XML. Progressing to Step S158, the Web service executing unit 12 transmits the address book information to the address book managing unit 32 of the address book management tool 30. The address book managing unit 32 receives the address book information, wherein either all the address book information or only the password is encrypted, from the image formation apparatus 10.

Although the manager who operates the address book management tool 30 can backup the received address book information, he/she cannot view the information within the encrypted range of the address book information.

Progressing to Step S159, the manager who operates the address book management tool 30 selects the device that restores the address book from the address book operation screen as shown in Fig. 20 displayed on the user I/F 35, and pushes the restoration button. If the restoration button is pushed, the address book managing unit 32 issues the address book restoration request to the Web service executing unit 12 of the image formation apparatus 10 at Step S160. The address book information, the pass phrase, and the information about the encryption system are contained in the address book restoration request of Step S160.

At Step S161, if the address book restoration request is received, the Web service executing unit 12 generates a cryptographic key based on the pass phrase contained in the address book restoration request. Progressing to Step S162, the Web service executing unit 12 decrypts the address book information included in the address book restoration request by using the cryptographic key generated at Step S161. Progressing to Step S163, the Web service executing unit 12 updates the address book 15 with the decrypted address book information. The Web service executing unit 12 updates the address book 15 through the UCS 14. Progressing to Step S164, the Web service executing unit 12 transmits the response to the address book restoration request issued at Step S160 to the address book managing unit 32 of the address book management tool 30.

As describe above with reference to the sequence diagram of Fig. 21, the range of encryption of the address book information that is to be transmitted to the address book management tool 30 at the time of backup restoration is adjusted according to the credibility of the address book management tool 30 or the manager who operates the address book management tool 30.

### [Embodiment 10]

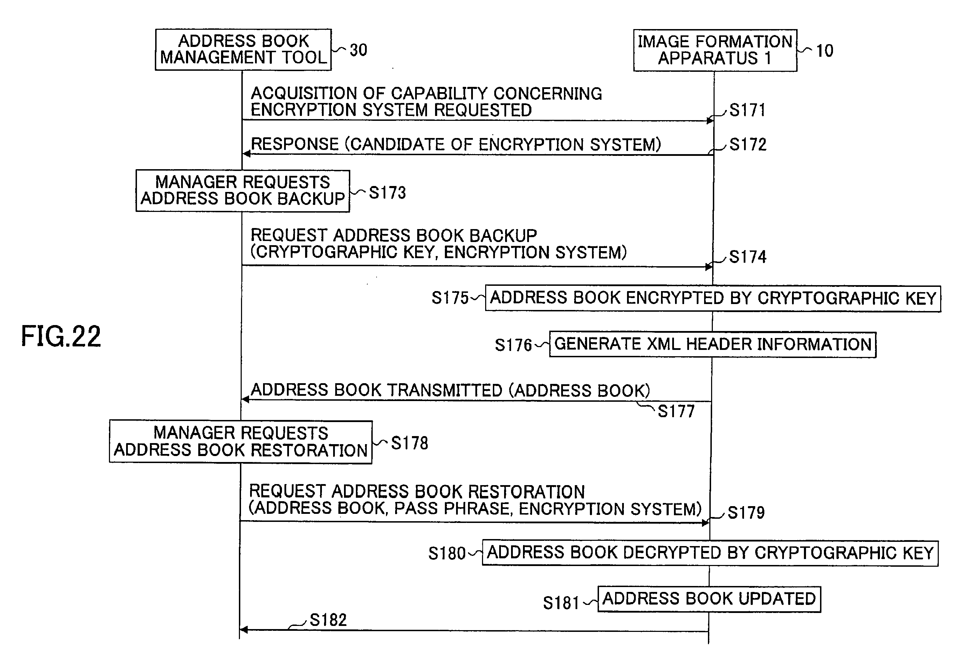

Fig. 22 is a sequence diagram showing a process carried out by the address book management system 1 according to Embodiment 10 of the present invention. The sequence diagram shows another example wherein the cryptographic key is provided to the image formation apparatus 10, and the address book information is shared using the backup/restoration function of the address book management tool 30.

Steps S171 through S173 are the same as Steps S151 through S153 of Fig. 21, and accordingly, the description is not repeated. If the backup button is pushed, the address book managing unit 32 issues the address book backup request to the Web service executing unit 12 of the image formation apparatus 10 at Step S174. The cryptographic key and the information about the encryption system are contained in the address book backup request of Step S174.

If the address book backup request is received, the Web service executing unit 12 determines the range of encryption of the address book information, i.e., whether all the address book information is to be encrypted or only the password is to be encrypted at Step S175; and encrypts the information within the range using the cryptographic key contained in the address book backup request, as in the case shown by the flowchart of Fig. 5. Since Steps S176 through S178 are the same as Steps S157 through S159 of Fig. 21, the description is not repeated.

If the restoration button is pushed, the address book managing unit 32 issues the address book restoration request to the Web service executing unit 12 of the image formation apparatus 10 at Step S179. The address book information, the cryptographic key, and the information about the encryption system are contained in the address book restoration request of Step S160.

If the address book restoration request is received, the Web service executing unit 12 decrypts the address book information included in the address book restoration request by using the cryptographic key contained in the address book restoration request at Step S180. Since Steps S181 and S182 are the same as Steps S163 and S164 of Fig. 21, the description is not repeated.

As described above with reference to the sequence diagram of Fig. 22, the range of encryption of the address book information that is to be transmitted to the address book management tool 30 at the time of backup restoration is adjusted according to the credibility of the address book management tool 30 or the manager who operates the address book management tool 30.

### [Embodiment 11]

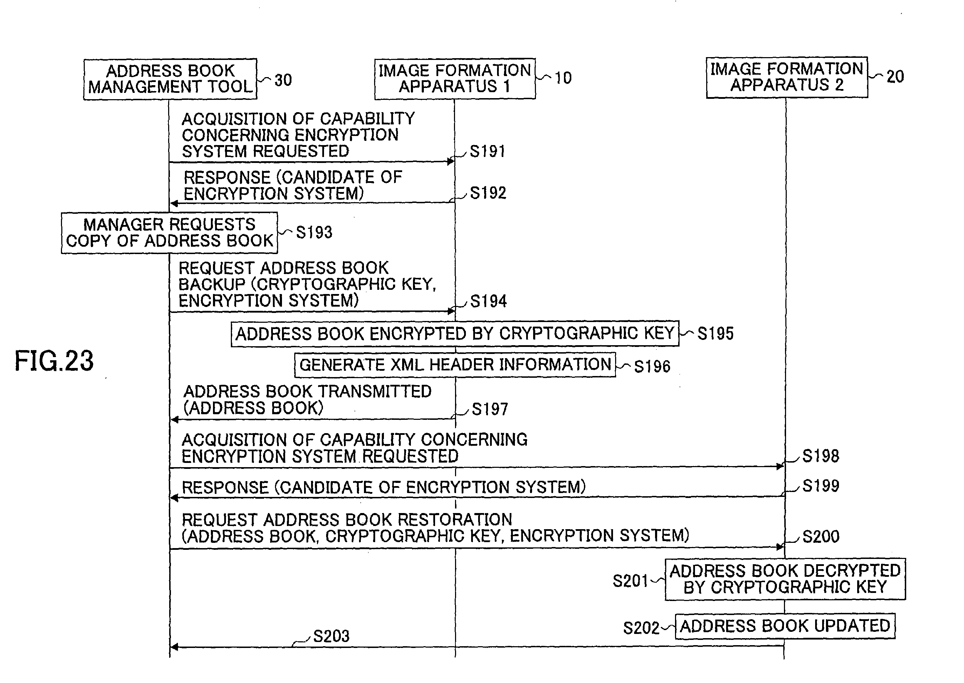

Fig. 23 is a sequence diagram showing a process carried out by the address book management system 1 according to Embodiment 11 of the present invention. The sequence diagram shows an example wherein the address book information is copied from the image formation apparatus 10 to the image formation apparatus 20 using the backup/restoration function of the address book management tool 30.

At Step S191, the address book managing unit 32 of the address book management tool 30 transmits the device capability acquisition request concerning the encryption system to the Web service executing unit 12 of the image formation apparatus 10. If the device capability acquisition request concerning the encryption system is received, the Web service executing unit 12 selects a candidate for the encryption system. Progressing to Step S192, the Web service executing unit 12 transmits the response to the device capability acquisition request issued at Step S191 to the address book managing unit 32 of the address book management tool 30. Information about the selected candidate encryption system is contained in the response of Step S192.

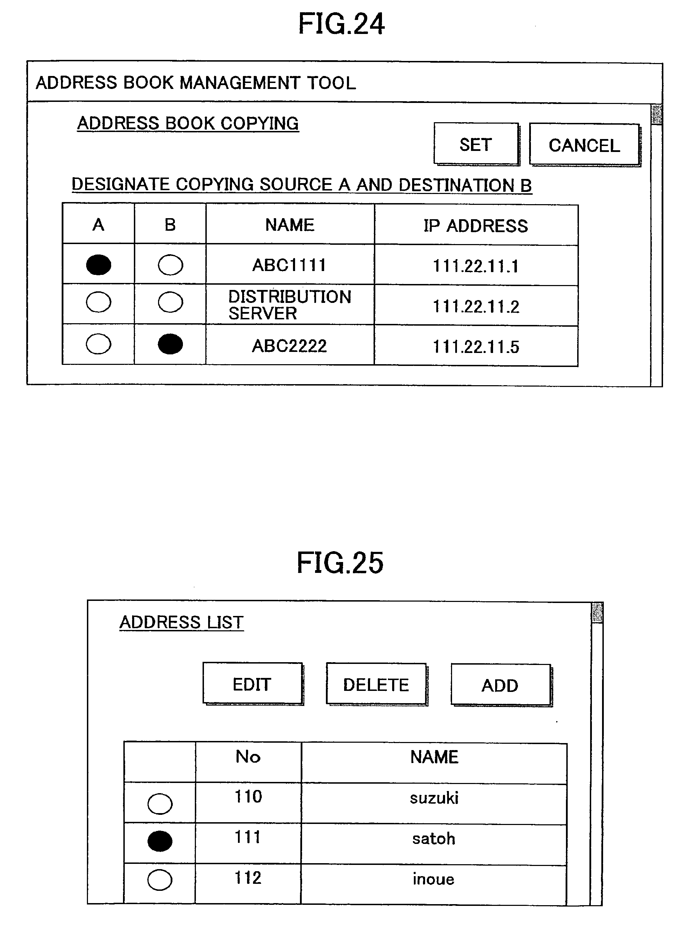

At Step S193, the manager who operates the address book management tool 30 selects the image formation apparatus 10 as the copying source of the address book, and the image formation apparatus 20 as the copying destination, the selection being carried out on an address book operation screen as shown in Fig. 24 displayed on the user I/F 35; and pushes a setup key such that the address book 15 is copied. If the setup key is pushed, the address book managing unit 32 issues the address book backup request to the Web service executing unit 12 of the image formation apparatus 10 at Step S194. The cryptographic key and the information about the encryption system are contained in the address book backup request of Step S194.

At Step S195, if the address book backup request is received, the Web service executing unit 12 determines the range of encryption of the address book information, i.e., whether all the address book information is to be encrypted or only the password is to be encrypted; and encrypts the information within the range using the cryptographic key contained in the address book backup request, as in the case shown by the flowchart of Fig. 5.

Progressing to Step S196, the Web service executing unit 12 generates the header information in XML. Progressing to Step S197, the Web service executing unit 12 transmits the address book information to the address book managing unit 32 of the address book management tool 30. The address book managing unit 32 receives the address book information, wherein either all the address book information or only the password is encrypted, from the image formation apparatus 10.

Although the manager who operates the address book management tool 30 can backup the received address book information, he/she cannot view the information within the encrypted range of the address book information.

Progressing to Step S198, the address book managing unit 32 of the address book management tool 30 transmits the device capability acquisition request concerning the encryption system to the Web service executing unit 22 of the image formation apparatus 20 serving as the copying destination. If the device capability acquisition request concerning the encryption system is received, the Web service executing unit 22 selects the candidate encryption system.

Progressing to Step S199, the Web service executing unit 22 transmits the response to the device capability acquisition request issued at Step S198 to the address book managing unit 32 of the address book management tool 30. Information about the selected candidate encryption system is contained in the response of Step S199. Progressing to Step S200, the address book managing unit 32 issues an address book restoration request to the Web service executing unit 22 of the image formation apparatus 20. The address book information, a cryptographic key, and the information about the encryption system are contained in the address book restoration request of Step S200.

If the address book restoration request is received, the Web service executing unit 22, at Step S201, decrypts the address book information included in the address book restoration request using the cryptographic key contained in the address book restoration request. Progressing to Step S202, the Web service executing unit 22 updates the address book 25 with the decrypted address book information. The Web service executing unit 22 updates the address book 25 through the UCS 24. Progressing to Step S203, the Web service executing unit 22 transmits the response to the address book restoration request issued at Step S200 to the address book managing unit 32 of the address book management tool 30.

As described above with reference to the sequence diagram of Fig. 23, the range of encryption of the address book information that is to be transmitted to the address book management tool 30 at the time of backup restoration is adjusted according to the credibility of the address book management tool 30 or the manager who operates the address book management tool 30.

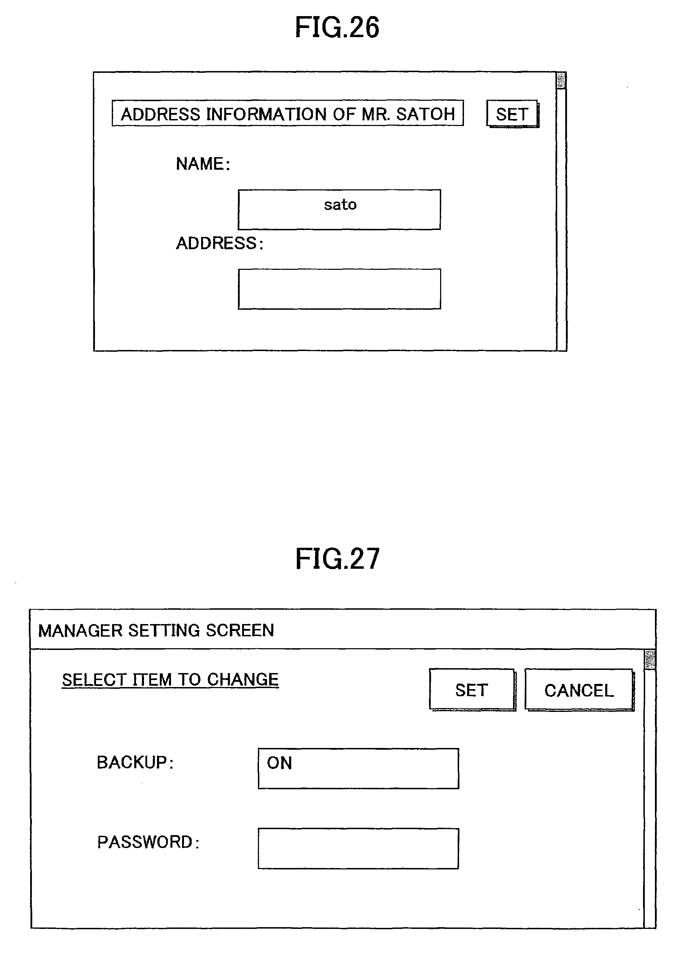

Fig. 25 is an example of the image of an address book edit screen. For example, if the user information to be edited is selected from the address book edit screen and a change button is pushed, the image formation apparatus 10 displays a property setting screen, such as shown in Fig. 26, on which the user information can be edited. Fig. 26 is an example of the property.setting screen. Further, on the side of the address book management tool 30, a manager setting screen, such as shown in Fig. 27, is displayed, wherein functions about the user information, such as ON/OFF of backup, can be set up.

Further, the present invention is not limited to these embodiments, but variations and modifications may be made without departing from the scope of the present invention. For example, although the address book management tool 30 is described as a separate entity from the image formation apparatus 10 or 20 in Embodiments, the function of the address book management tool 30 can be contained in the image formation apparatus 10 or 20.

Further, although the address book management system 1 in Embodiments is described as adjusting the range of encryption of the address book information by selecting one of "all the address book information" and "only the password" according to the policy of the address book management system 1, the credibility of the address book management tool 30, and the manager who operates the address book management tool 30, the range of encryption can be suitably defined.

## Claims

1. An information management system 1 wherein one or more information processors (10, 20) and an information management apparatus (30)are connected through a predetermined network (60), **characterized in that**
the information processor (10) adjusts an encryption level of information containing two or more items having different security levels according to predetermined credibility when the information is to be stored to the information management apparatus.

2. An information management system as claimed in claim 1, **characterized in that**
the information processor adjusts the encryption level of the information according to the credibility of one of the information management apparatus, a user who operates the information management apparatus, and a predetermined policy.

3. An information management system as claimed in claim 1, **characterized in that**
one of a range of the information to be encrypted and an encryption system is adjusted according to the predetermined credibility.

4. An information management system as claimed in claim 3, **characterized in that**
the range of the information to be encrypted is either all the items having different security levels, or a part thereof.

5. An information management system as claimed in claim 1, **characterized in that**
a first information processor (10) encrypts the information according to the predetermined credibility, and stores the encrypted information in a second information processor (20) through the information management apparatus.

6. An information management system as claimed in claim 5, **characterized in that**
the first information processor shares a cryptographic key used for encryption of the information with the second information processor.

7. An information management system as claimed in claim 5, **characterized in that**
the first information processor generates the cryptographic key using a pass phrase, and shares the pass phrase with the second information processor.

8. An information management system as claimed in claim 5, **characterized in that**
the first information processor stores the encrypted information in the second information processor using a backup and restoration function of the information management apparatus.

9. An information management system as claimed in claim 4, **characterized in that**
the information management apparatus does not display, or does not readably display the information within the encrypted range of the items having different security levels when displaying the information is requested by the user, the information being received from the information processor.

10. An information processor (10) that stores information containing two or more items having different security levels in an information management apparatus (30) connected through a predetermined network (60), **characterized by**:
an encryption level adjusting unit(16) for adjusting a level of encryption of the information according to predetermined credibility when the information is to be stored to the information management apparatus (30).

11. An information processor as claimed in claim 10, **characterized in that**
the encryption level of the information is adjusted according to credibility of the information management apparatus, a user who operates the information management apparatus, and a predetermined policy.

12. An information processor as claimed in claim 10, **characterized in that**
the encryption level of the information is adjusted by according to one of a range of the information to be encrypted and a system of encryption according to the predetermined credibility.

13. An information processor as claimed in claim 12, **characterized in that**
the range of the information to be encrypted is either all the items having different security levels, or a part thereof.

14. An information management method of an information management system (1) **characterized in that** one or more information processors (10, 20) and an information management apparatus(30) are connected through a predetermined network (60), **characterized by**:
a step of the information processor (10) adjusting a level of encryption of information according to predetermined credibility, and
a step of storing the information in the information management apparatus, the information being encrypted according to the adjusted level of encryption.

15. An information management method as claimed in claim 14, **characterized in that**
the information processor adjusts the encryption level of the information according to credibility of the information management apparatus, a user who operates the information management apparatus, and a predetermined policy.

16. An information management method as claimed in claim 14, **characterized in that**
the information processor adjusts one of the range of the information to be encrypted and an encryption system according to the predetermined credibility.

17. An information management method as claimed in claim 16, **characterized in that**
the range of the information to be encrypted is either all the items having different security levels, or a part thereof.
